# EUROPEAN PATENT APPLICATION

(11) **EP 4 221 183 A1**
(43) Date of publication of application: **02.08.2023**
(21) Application number: 21886700.0
(22) Date of filing: 21.10.2021
(51) Int. Cl.: H04N 5/232, H04N 5/225, H04M 1/02

(54) **METHOD FOR TAKING PHOTOGRAPH BY USING PLURALITY OF CAMERAS, AND DEVICE THEREFOR**

(30) Priority: 26.10.2020 KR 20200139496
(71) Applicant: Samsung Electronics Co., Ltd., Suwon-si, Gyeonggi-do 16677 (KR)
(72) Inventor: LEE, Changho, Suwon-si, Gyeonggi-do 16677 (KR); WOO, Kwangtaek, Suwon-si, Gyeonggi-do 16677 (KR); OH, Deukkyu, Suwon-si, Gyeonggi-do 16677 (KR); KIM, Byoungkug, Suwon-si, Gyeonggi-do 16677 (KR); AN, Jinwan, Suwon-si, Gyeonggi-do 16677 (KR)
(74) Representative: Gulde & Partner
(86) International application number: PCT/KR2021/014834
(87) International publication number: WO 2022/092706

(57) **Abstract**

A processor included in an electronic device according to an embodiment may execute a first application associated with a first camera module and a second camera module, and in response to the execution of the first application, output a first preview image based on first image data acquired through the first camera module to a first area of a flexible display. The processor may detect an event of expanding the flexible display while the first preview image is output to the flexible display, and output a second preview image based on second image data acquired through the second camera module to a second area of the flexible display, the second area being extended to be larger than the first area. Various other embodiments identified through the specification are possible.

## Description

### [Technical Field]

Embodiments disclosed herein relate to an electronic device for taking photographs by using multiple cameras and a method therefor.

### [Background Art]

A mobile device such as a smartphone or a tablet includes a camera for capturing photographs and videos. The mobile device may include multiple cameras on the front or rear surface thereof, respectively, to improve the camera performance. For example, the multiple cameras may include a wide-angle camera, an ultrawide-angle camera, a telephoto camera, and/or a macro camera. In order to switch between multiple cameras having the above-mentioned functions, a user may change cameras by selecting icons indicating the corresponding cameras in order to select cameras having different functions.

In addition, mobile devices are equipped with various kinds of displays in addition to multiple cameras, thereby improving user experiences. For example, a mobile device may be equipped with a flexible display designed to be able to bend or slide.

### [Disclosure of Invention]

### [Technical Problem]

Mobile devices have a problem in that, even if sliding of a display expands the display and changes the resolution, the expanded area is not utilized. Therefore, if an appropriate resolution fails to be provided according to the mobile state before and after expansion of the display, the expanded area is a wasted area in which no user interface is displayed.

In addition, when the display is expanded during an operation of an application for capturing photographs or videos, the already operating camera module is maintained with no change regardless of whether the display is expanded or not. Therefore, although the area of displays of electronic devices has been increased, switching camera modules so as to reflect the user's intent has been limited.

Various embodiments of the disclosure may provide a device and a method wherein, in response to expansion of a flexible display of a mobile device supporting multiple cameras, camera switching is supported, and a preview area is controlled according to the changed resolution.

### [Solution to Problem]

An electronic device according to an embodiment disclosed herein may include a flexible display, a first camera module, a second camera module, and at least one processor electrically connected to the flexible display, the first camera module, and the second camera module. The at least one processor may execute a first application associated with the first camera module and the second camera module and may output, in response to execution of the first application, a first preview image based on first image data acquired through the first camera module in a first area of the flexible display. The at least one processor may detect an event for expanding the flexible display while the first preview image is output on the flexible display, and may output, in response to detecting of the event, a second preview image based on second image data acquired through the second camera module in a second area expanded compared with the first area of the flexible display.

In addition, a method for operating an electronic device according to an embodiment disclosed herein may include the operations of executing a first application associated with a first camera module and a second camera module, outputting, in response to execution of the first application, a first preview image based on first image data acquired through the first camera module in a first area of a flexible display, detecting an event for expanding the flexible display while the first preview image is output on the flexible display, and outputting, in response to detecting of the event, a second preview image based on second image data acquired through the second camera module in a second area expanded compared with the first area of the flexible display.

In addition, an electronic device according to an embodiment disclosed herein may include a display, multiple camera modules including a first camera module, a second camera module, and a third camera module, and at least one processor electrically connected to the display and the multiple camera modules. The at least one processor may execute a first application associated with the multiple camera modules, may output, in response to execution of the first application, a first preview image based on first image data acquired through the first camera module in a first area of the flexible display, may detect an event for expanding the display while the first preview image is output on the flexible display, may activate the second camera module or the third camera module in response to detecting of the event, and may output a second preview image based on second image data acquired through the second camera module or a third preview image based on third image data acquired through the third camera module in a second area expanded compared with the first area of the display.

### [Advantageous Effects of Invention]

According to various embodiments disclosed herein, camera modules may be switched according to the degree of expansion of a display.

In addition, according to various embodiments, the resolution regarding a preview area may be changed according to the degree of expansion of a display.

In addition, according to various embodiments, the user's sliding usability may be increased.

Various other advantageous effects identified explicitly or implicitly through the disclosure may be provided.

### [Brief Description of Drawings]

FIG. 1A illustrates the front surface of an electronic device according to an embodiment.
FIG. 1B illustrates the rear surface of an electronic device according to an embodiment.
FIG. 2 illustrates hardware and software configurations of an electronic device according to an embodiment.
FIG. 3 illustrates a process of exchanging information regarding a camera and a display in an electronic device according to an embodiment.
FIG. 4 is a flowchart illustrating a process of switching camera modules, based on a display expansion event in an electronic device according to an embodiment.
FIG. 5A illustrates a process in which camera modules are switched when a display is expanded in an electronic device according to an embodiment.
FIG. 5B illustrates a process in which camera modules are switched when a display is expanded in an electronic device according to an embodiment.
FIG. 6 is a flowchart illustrating a process of expanding a display in response to a user's drag input in an electronic device according to an embodiment.
FIG. 7A is a flowchart illustrating a process of switching a camera module to a second camera module in response to a user's drag input in an electronic device according to an embodiment.
FIG. 7B is a flowchart illustrating a process of switching a camera module to a third camera module in response to a user's drag input in an electronic device according to an embodiment.
FIG. 8 is a flowchart illustrating a process of expanding a display and switching camera modules, based on a touched preview area in an electronic device according to an embodiment.
FIG. 9 illustrates a process of expanding a display and switching camera modules, based on a touched preview area in an electronic device according to an embodiment.
FIG. 10 is a flowchart illustrating a process of changing the resolution of a preview area according to the degree of expansion of a display in an electronic device according to an embodiment.
FIG. 11 illustrates a process of changing the resolution of a preview area according to the degree of expansion of a display in an electronic device according to an embodiment.
FIG. 12 illustrates a process of editing an image according to the degree of expansion of a display in an electronic device according to an embodiment.
Fig. 13 is a block diagram illustrating an electronic device in a network environment according to various embodiments.
Fig. 14 is a block diagram illustrating the camera module according to various embodiments.

### [Best Mode for Carrying out the Invention]

Hereinafter, various embodiments of the disclosure will be described with reference to the accompanying drawings. However, this is not for limiting the disclosure with regard to specific embodiments, and is to be interpreted as including various modifications, equivalents, and/or alternatives of embodiments of the disclosure.

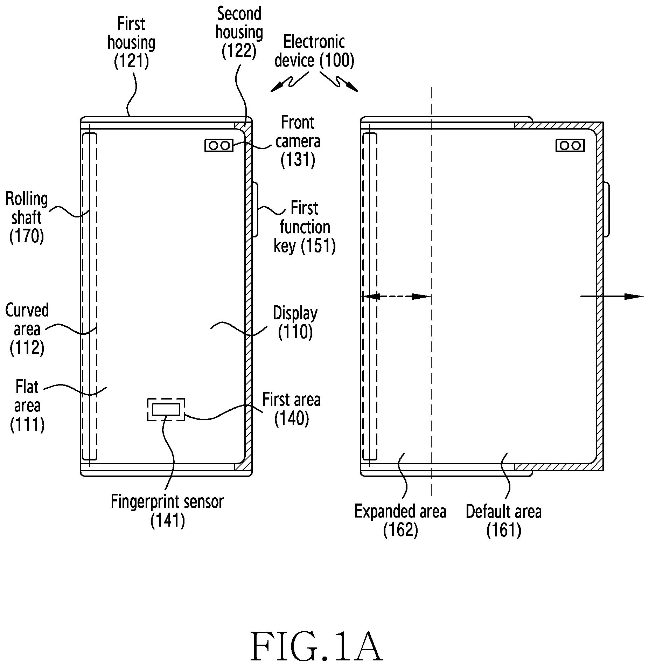

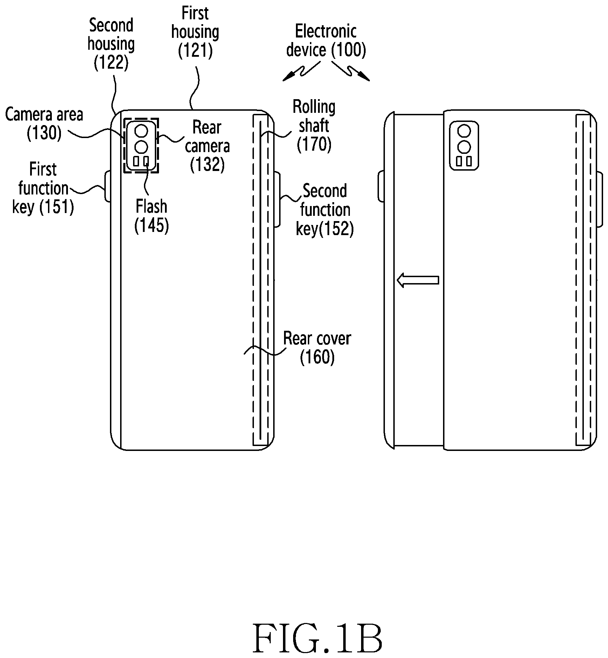

FIG. 1A illustrates the front surface of an electronic device according to an embodiment. FIG. 1B illustrates the rear surface of an electronic device according to an embodiment.

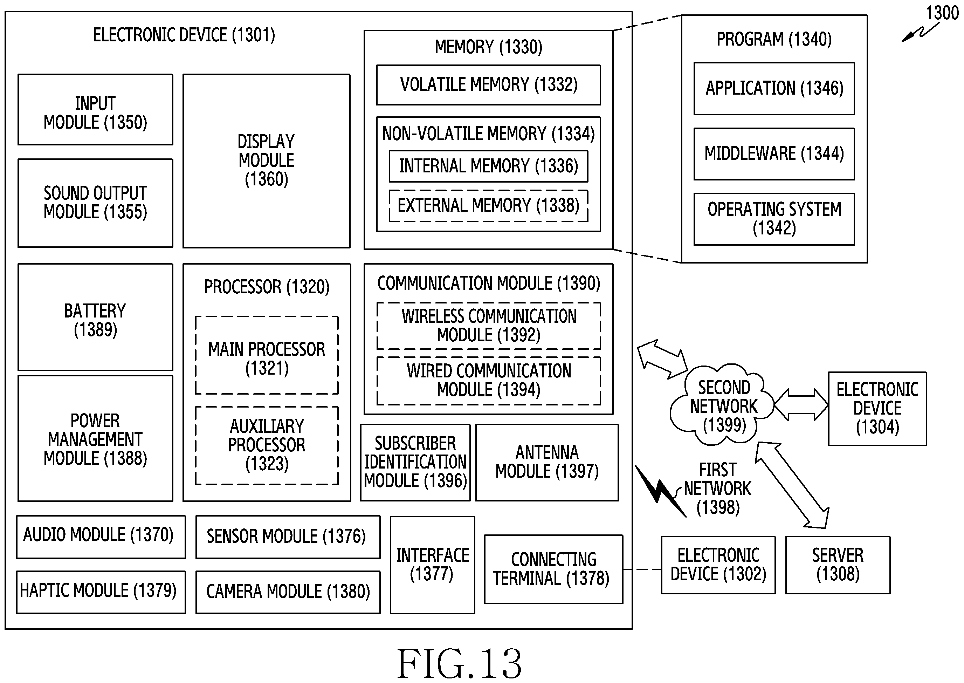

Referring to FIG. 1A and FIG. 1B, the electronic device (for example, the electronic device 1301 in FIG. 13) 100 may include a first housing 121 and a second housing 122. At least a part of the second housing 122 may be separated from the first housing 121 when the display (for example, the display module 1360 in FIG. 13) 110 is expanded. For example, the second housing 122 may protrude to the outside of the electronic device 100 while being connected to the first housing through a first plate. The first housing 121 may be herein referred to as a main housing, and the second housing 122 may be herein referred to as a sliding housing. The description that the display 110 is expanded may be herein understood as meaning that the area of the display 110 disposed on the front surface of the electronic device 100 is expanded.

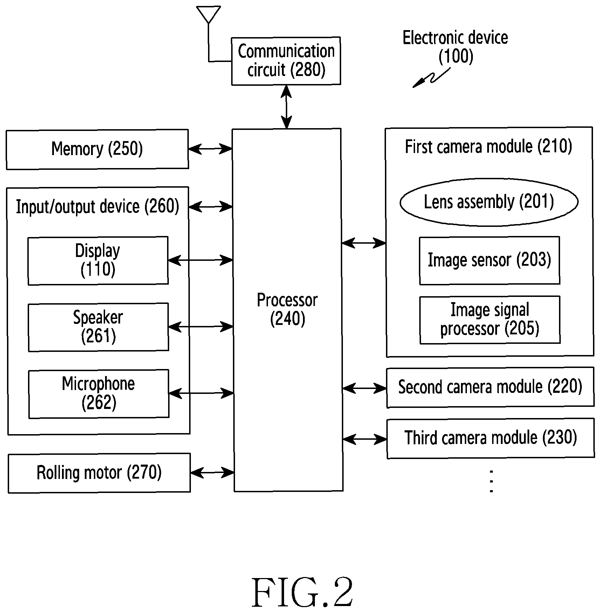

In an embodiment, the display 110 may include a flexible display. The display 110 may adopt a flexible display, a rolling structure, and/or a hinge structure such that the display 110 can be folded in the horizontal or vertical direction or can slide. The display 110 may be configured such that, when seen from the front with reference to a rolling shaft 170, the front area of the display 110 can be expanded. The front area of the display 110 may be expanded or reduced by a rolling motor included inside the electronic device 100 with reference to the rolling shaft 170. For example, in response to detecting a command for expanding the display 110, the processor (for example, the processor 240 in FIG. 2) may drive the rolling motor so as to expand or reduce the display 110. The display 110 may be expanded or reduced by an external force with reference to the rolling shaft 170. For example, the front area of the display 110 may be expanded by a force exerted by the user to pull the second housing 122. In response to the user pulling a surface of the display 110 or the second housing 122, the processor 240 may drive the rolling motor so as to assist expansion of the display 110 by the user.

In an embodiment, when the display 110 is not expanded, the default area 161 of the display 110 may be disposed on the front surface of the electronic device 100. When the display 110 is not expanded, the default area 161 may occupy the majority of the front surface of the electronic device 100. When the display 110 is expanded, the default area 161 of the display 110 and an expanded area 162, which is expanded and disposed on the front surface, may be disposed on the front surface of the electronic device 100. The display 110 may occupy a part of a side surface of the electronic device 100.

In an embodiment, the display 110 may be configured so as to surround at least a part of the first housing 121 and at least a part of the second housing 122. On the front surface of the electronic device 100, the display 110 and a bezel area that surrounds at least a partial periphery of the display 110 may be disposed. In the example of FIG. 1A, the display 110 may include a flat area 111 and a curved area 112 extending from the flat area 111 toward a side surface of the electronic device 100. Although the curved area 112 is illustrated with regard to only a surface (for example, the front surface) of the electronic device 100 in FIG. 1A, it may be understood that the curved area 112 is formed with regard to another surface (for example, the rear surface) of the electronic device 100 as well. For example, the curved area 112 may extend to the rear surface of the electronic device 100, and in this case, the electronic device 100 may include the display 110 on the front and rear surfaces thereof.

In an embodiment, the display 110 may extend to the rear surface of the electronic device 100 while occupying the majority of the front surface of the electronic device 100. An area of the display 110 extending to the rear surface may not be exposed by a rear cover. For example, when the display 110 is not expanded, an area of the display 110 may be inserted into the rear cover 160.

In an embodiment, the first area 140 of the display 110 may include a fingerprint sensor 141 for recognizing the user's fingerprint. The fingerprint sensor 141 may be disposed on a lower layer of the display 110 such that the same is not visible to the user, or disposed to be hardly visible. In addition, an additional sensor for user/biometric authentication other than the fingerprint sensor 141 may be disposed on a partial area of the display 110. In another embodiment, the sensor for user/biometric authentication may be disposed in an area of the bezel. For example, an IR sensor for iris authentication may be exposed through an area of the display 110 or exposed through an area of the bezel.

In an embodiment, a front camera 131 may be disposed on the front surface of the electronic device 100. Although the front camera 131 is illustrated in the embodiment in FIG. 1A as being exposed through an area of the display 110, the front camera 131 may be exposed through the bezel in another embodiment.

In an embodiment, the electronic device 100 may include one or more front cameras 131. For example, the electronic device 100 may include multiple cameras, such as at least a first front camera and a second front camera. In an embodiment, the first front camera and the second front camera may be the same kind of cameras having identical specifications (for example, pixels), but the first front camera and the second front camera may be implemented as cameras having different specifications. The electronic device 100 may support a function related to a dual camera (for example, 3D photography, auto focus, and the like) through the two front cameras.

In an embodiment a rear camera 132 may be disposed on the rear surface of the electronic device 100. The rear surface 132 may be exposed through an area of the rear cover 160. In an embodiment, the electronic device 100 may include multiple rear cameras disposed in a camera area 130. For example, the electronic device 100 may include two or more rear cameras. For example, the electronic device 100 may include a first rear camera, a second rear camera, and a third rear camera. The first rear camera, the second rear camera, and the third rear camera may have different specifications. For example, the first rear camera, the second rear camera, and/or the third rear camera may differ from each other in terms of the FOV, the pixels, the diaphragm, whether optical zoom/digital zoom is supported, whether the image stabilization function is supported, and the type and arrangement of lens sets included in respective cameras. For example, the first rear camera may be a normal camera, the second rear camera may be a camera for wide photography, and the third rear camera may be a camera for telephotography. The description herein regarding the functions or characteristics of the front cameras is applicable to the rear cameras, and vice versa.

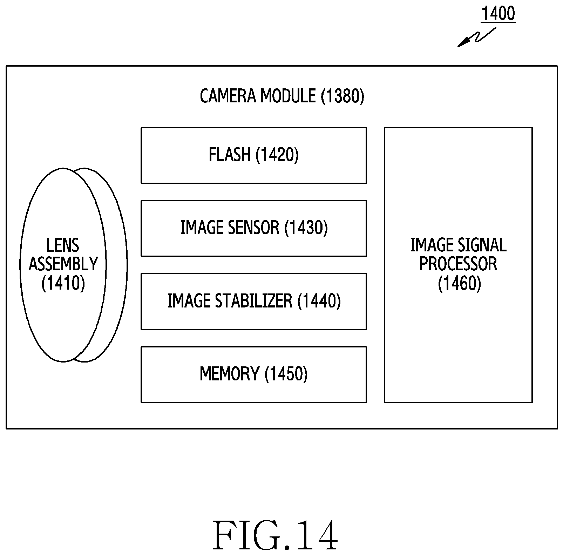

In an embodiment, in the camera area 130, various kinds or hardware for assisting photography, such as a flash (for example, the flash 1420 in FIG. 14) 145, or sensors may be additionally disposed. For example, a distance detecting sensor (for example, a time of flight (TOF) sensor) for detecting the distance between a subject and the electronic device 100 may be further included in the camera area 130.

In an embodiment at least one physical key may be disposed on a side portion of the electronic device 100. For example, a first function key 151 for turning the display 110 on/off or for powering the electronic device 100 on/off may be disposed on the right periphery with reference to the front surface of the electronic device 100. The first function key 151 may be disposed on the second housing 122. In an embodiment, a second function key 152 for controlling the volume of the electronic device 100 or for controlling the screen brightness or the like may be disposed on the left periphery with reference to the front surface of the electronic device 100. Moreover, an additional button or key may be disposed on the front or rear surface of the electronic device 100. For example, a physical button or a touch button mapped to a specific function may be disposed in the bottom area of the front bezel.

The electronic device 100 illustrated in FIG. 1A and FIG. 1B corresponds to an example, and does not limit the type of a device to which the technical idea disclosed herein is applied. The technical idea disclosed herein is also applicable to a tablet or a laptop. Various embodiments will hereinafter be described with reference to the electronic device 100 illustrated in FIG. 1A and FIG. 1B for convenience of description.

FIG. 2 illustrates hardware and software configurations of an electronic device according to an embodiment. Referring to FIG. 2, components included in the electronic device 100 may have various electrical/operational connection relations.

Referring to FIG. 2, the electronic device 100 may include multiple camera modules, a processor (for example, the processor 1320 in FIG. 13) 240, a memory (for example, the memory 1330 in FIG. 13) 250, an input/output device 260, a rolling motor 270, and a communication circuit 280.

In an embodiment, the multiple camera modules may include at least a first camera module 210, a second camera module 220, and a third camera module 230. The first camera module 210 may include a lens assembly (for example, the lens assembly 1410 in FIG. 14) 201, an image sensor (for example, the image sensor 1430 in FIG. 14) 203, and an image signal processor (for example, the image signal processor 1460 in FIG. 14) 205. Referring to FIG. 2, although the lens assembly 201, the image sensor 203, and the image signal processor 205 are illustrated as being included in the first camera module 210, the description regarding the first camera module 210 may be identically or similarly applied to the second camera module 220 and the third camera module 230.

In an embodiment, the image sensor 203 may be a complementary metal oxide semiconductor (CMOS) sensor or a charged coupled device (CCD). The image sensor 203 may have multiple individual pixels integrated thereon, and each individual pixel may include a micro lens, a color filter, and a photodiode. Each individual pixel may convert inputted light to an electric signal.

In an embodiment, the image signal processor 205 may acquire the converted electric signal. The image signal processor 205 may perform image processing with regard to electrically converted image data. The image signal processor 205 may perform image processing such as 3A processing, lens shading correction, edge enhancement, and dead pixel correction. The 3A may include at least one of auto white balance (AWB), auto exposure (AE), and auto focusing (AF).

In an embodiment, the processor 240 may transmit and receive network information, based on wireless communication, through the communication circuit 280. The processor 240 may acquire the user's position information, information regarding the photography position, and the like from the outside through the communication circuit 280. The processor 240 may store the pieces of information acquired through the communication circuit 280 in the memory 250. The processor 240 may provide the pieces of information acquired through the communication circuit 280 to multiple camera modules.

In an embodiment, the memory 250 may store instructions and/or data, which can be executed by the processor 240. The memory 250 may store image data acquired through a camera module. The memory 250 may store still images and/or videos acquired through a camera module. The memory 250 may be understood in a concept encompassing a component in which data is temporarily stored, such as a random access memory (RAM), and/or a component in which data is permanently stored, such as a solid state drive (SSD). In various embodiments, the memory 250 may include various types, and an appropriate type may be adopted according to the device usage.

In an embodiment, the memory 250 may store applications associated with the first camera module 210, the second camera module 220, and the third camera module 230. For example, the memory 250 may store a camera application. The camera application may support various photography functions such as photograph capture, video capture, panorama capture, and slow motion capture.

In an embodiment, applications associated with camera modules may correspond to various kinds of applications. For example, a chatting application, a web browser application, an email application, or a shopping application may use the first camera module 210, the second camera module 220, and the third camera module 230 in order to support various functions such as video communication, photograph/video attachment, a streaming service, and a product image or product-related virtual reality (VR) capture function.

In an embodiment, the input/output device 260 may include at least a display 110, a speaker 261, and a microphone 262. The display 110 may be implemented integrally with a touch panel. The display 110 may support a touch function, may detect a user input such as a touch made with a finger, and may transfer the same to the processor 240. The display 110 may display an execution screen regarding an application executed by the processor 240, or contents such as images and/or videos stored in the memory 250 may be displayed on the display 110. The processor 240 may display image data acquired through a camera module (for example, the first camera module 210 in FIG. 2) on the display 110 in real time. The processor 240 may acquire the user's voice input through the microphone 262. The processor 240 may perform a voice recognition function corresponding to the acquired user voice. The speaker 261 may output voice signals.

In an embodiment, the rolling motor 270 may be electrically connected to the rolling shaft 170 and the processor 240. The processor 240 may rotate the rolling shaft by applying a voltage to the rolling motor 270. The rolling motor 270 may determine the degree of rotation of the rolling shaft, based on sliding state information of the display 110 acquired from the processor 240.

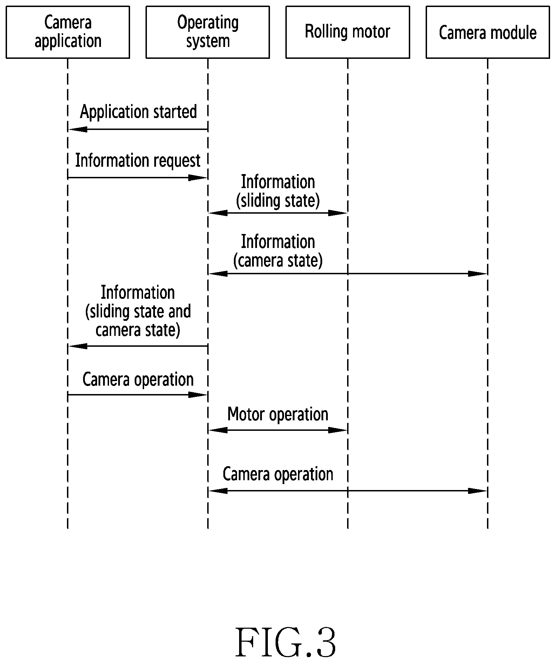

FIG. 3 illustrates a process of exchanging information regarding a camera and a display in an electronic device according to an embodiment.

In an embodiment, the operating system of the electronic device 100 may operate a camera application. The camera application may request the operating system to provide information. The information may include information regarding the degree of rotation of a rolling shaft, information regarding the sliding state of a display, and/or information regarding a camera module. The operating system may acquire information regarding the degree of rotation of the rolling shaft and/or information regarding the sliding state of the display 110 from a rolling motor. The operating system may acquire information regarding a currently operating camera module from at least one camera module.

In an embodiment, the camera application may acquire information regarding the degree of rotation of a rolling shaft, information regarding the sliding state of a display, and/or information regarding a camera module. The camera application may provide the operating system with information regarding a camera module to be operated, based on the acquired information.

In an embodiment, the operating system may determine the sliding state of the display 110 and the resolution of the display 110. The operating system may expand or reduce the display by operating the rolling motor. The operating system may perform camera module switching, based on the resolution of the display 110 or the sliding state of the display 110. For example, when the display 110 has not slid and thus is not in an expanded state, the operating system may maintain operations of the preview area of the display 110 and the camera module. When the display 110 has slid and thus is in an expanded state, the operating system may perform at least one of changing the preview area of the display 110, changing the resolution, or switching the camera module.

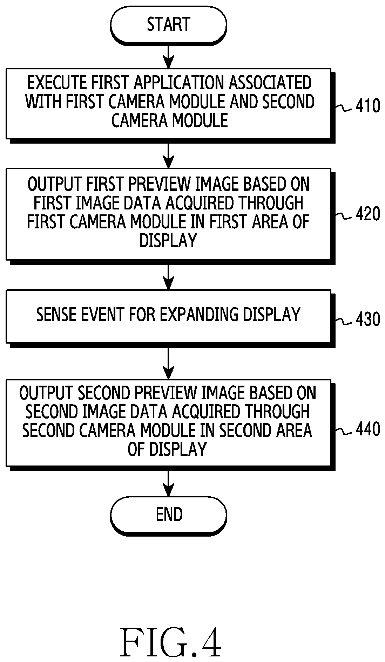

FIG. 4 is a flowchart illustrating a process of switching camera modules, based on a display expansion event in an electronic device according to an embodiment. The process of switching camera modules, based on a display expansion event, may be identically applied not only when capturing photographs, but also when capturing videos.

In operation 410 according to an embodiment, a processor 240 may execute a first application associated with a first camera module 210 and a second camera module 220. The first application may be a camera application and/or a camera driving-related application. The processor 240 may execute the first application in response to an input regarding execution of the first application. The processor 240 may activate the first camera module 210 and/or the second camera module 220 in response to execution of the first application. The processor 240 may acquire image data through the activated camera module.

In operation 420 according to an embodiment, the processor 240 may output a first preview image based on first image data acquired through the first camera module 210 in the first area of the display 110. The first area may be at least a partial area among the area in which a preview image can be output before the display 110 is expanded. The first area may be an area disposed to face the front surface of the electronic device 100 when the display 110 is not expanded. The first camera module 210 mentioned in FIG. 4 may be understood as a camera module including a wide-angle camera.

In operation 430 according to an embodiment, the processor 240 may detect an event for expanding the display 110. While the first preview image is output on the display 110, the processor 240 may detect an event for expanding the display 110.

In an embodiment, the event for expanding the display 110 may be generated by an external force and/or control of the processor 240. For example, the front area of the display 110 may be expanded by a force exerted by the user to pull a housing (for example, the second housing 122 in FIG. 1).

In an embodiment, the processor 240 may expand the front area of the display 110 in response to a user input for expanding the display 110. The user input may include a touch input through the display 110 and/or a voice input. For example, upon acquiring a voice input such as "Bixby, expand the display", the processor 240 may expand the display 110 by driving the rolling motor 270. The user input may include a user input made by pressing a physical button. For example, the electronic device 100 may include a separate button for expanding/reducing the display 110 on a surface of the housing such that, if the user presses the button, the display 110 is expanded or reduced by driving the rolling motor 270.

In operation 440 according to an embodiment, the processor 240 may output a second preview image based on second image data acquired through the second camera module 220 in the second area of the display. In response to detecting an event for expanding the display 110, the processor 240 may output the second preview image in the second area which is expanded compared with the first area of the display 110. The second area may be at least a partial area among the are in which a preview image can be output after the display 110 is expanded. The second area may be an area disposed to face the front surface of the electronic device 100 when the display 110 is expanded. The second camera module 220 mentioned in FIG. 4 may be a camera module including at least one of a macro lens, a telephoto lens, or an ultrawide-angle lens.

In an embodiment, upon detecting an event for expanding the display 110, the processor 240 may analyze the user's intent and/or a preview image so as to determine a camera module to be switched. The processor 240 may detect an object included in acquired image data, thereby acquiring data regarding the object. The processor 240 may determine the type of the object through an object detection function. The processor 240 may determine the distance between the electronic device 100 and an object to be photographed by using a distance detecting sensor (for example, time of flight (TOF)) sensor.

In an embodiment, the processor 240 may determine whether macro photography is performed, based on data regarding the object and/or the focal distance. When it is conformed that the user is performing macro photography, the processor 240 may switch the currently operating camera module from the first camera module 210 to a second camera module 220 including a macro lens. For example, when the object is positioned within a first distance (for example, 30cm) from the electronic device 100, the processor 240 may switch the currently operating camera module to a second camera module 220 including a macro lens in response to an event for expanding the display 110.

In an embodiment, the processor 240 may determine whether the scenery is being photographed, based on image data, data regarding an object, and/or the focal distance. When it is determined that the user is photographing the scenery, the processor 240 may switch the operating camera module from the first camera module 210 to a second camera module 220 including an ultrawide-angle lens. For example, when analysis of image data confirms that natural objects (for example, natural objects such as the sky, the sea, trees, mountains, and fields) occupy a first proportion or more, and that the natural objects are out of the focal distance, the processor 240 may switch the operating camera module to a second camera module 220 including an ultrawide-angle lens in response to an event for expanding the display 110.

In an embodiment, the processor 240 may determine whether long-distance photography regarding an object is performed, based on data regarding the object and/or the focal distance. When it is determined that the user is performing the long-distance photography, the processor 240 may switch the operating camera module from the first camera module 210 to a second camera module 220 including a telephoto lens. For example, when the major object to be photographed is displayed at the center of a preview image, and when the object is positioned outside a second distance (for example, 1m) from the electronic device 100 and is out of the focal distance, the processor 240 may switch the operating camera module to a second camera module 220 including a telephoto lens in response to an event for expanding the display 110.

In an embodiment, when switching of camera modules is performed, the processor 240 may perform the switching in a seamless manner. For the sake of seamless camera module switching, the processor 240 may gradually change the preview image during a predetermined frame. For example, when switching the currently operating camera module from the first camera module 210 to the second camera module 220, the processor 240 may gradually display a change between a preview image acquired through the first camera module 210 and a preview image acquired through the second camera module 220 over N frames.

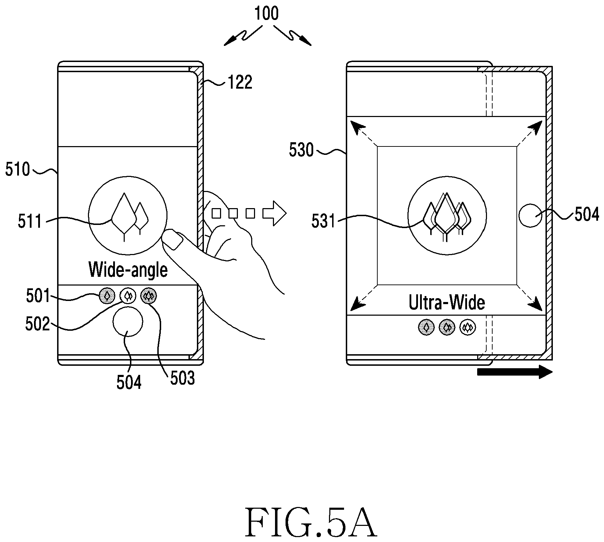

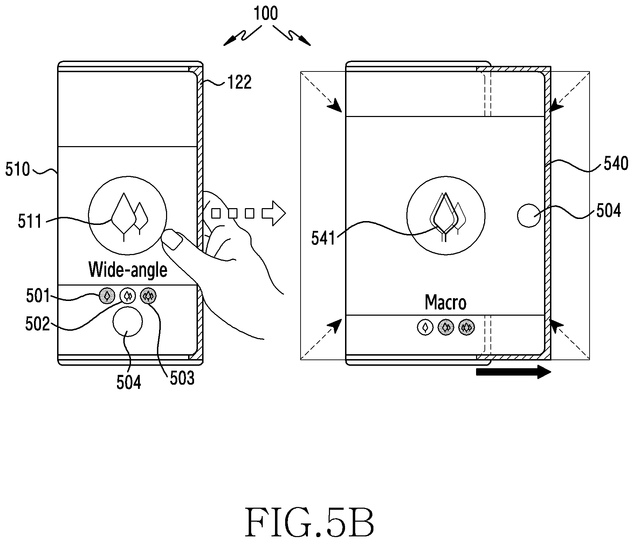

FIG. 5A illustrates a process in which camera modules are switched when a display is expanded in an electronic device according to an embodiment. FIG. 5B illustrates a process in which camera modules are switched when a display is expanded in an electronic device according to an embodiment. FIG. 5A and FIG. 5B may illustrate an embodiment corresponding to FIG. 4.

Referring to FIG. 5A and FIG. 5B, a processor 240 may display a first icon 501, a second icon 502, a third icon 503, and a first button 504, which are related to a photography mode, in an area of a display 110. The first icon 501 may be a button for telephotography. The second icon 502 may be a button for normal photography. The third icon 503 may be a button for ultrawide-angle photography. The first button 504 may be a button for starting photography. The position of the first button 504 may be changed, based on whether the display is expanded.

Referring to FIG. 5A, the display 110 may display a first preview image 510 in a first area of the display 110, based on a camera module including a wide-angle camera. The first preview image 510 may include a first object 511 having a magnification corresponding to the wide-angle lens.

Referring to FIG. 5A, when the display 110 has been expanded, a second preview image 530 may be displayed on a second area of the display 110, based on a camera module including an ultrawide-angle camera. The second preview image 530 may include a second object 531 having a magnification corresponding to the ultrawide-angle lens.

In an embodiment, the processor 240 may acquire image data through a camera module including an ultrawide-angle lens. The angle of view regarding image data acquired through a camera module including an ultrawide-angle lens may be wider than image data acquired through a camera module including a wide-angle lens. The processor 240 may output image data acquired based on the ultrawide-angle lens through the expanded display 110 as a preview image.

In an embodiment, the processor 240 may detect the expanded display 110 being reduced. The processor 240 may reduce the display 110 when the display 110 is reduced in response to a camera mode change, or when an external force for reducing the display 110 is detected. This may be identically applied to a case in which the display 110 has been expanded in the following embodiments.

In an embodiment, the processor 240 may change the camera module when the expanded display 110 is reduced. For example, when the display 110 is reduced while outputting a preview based on image data acquired through a camera module including an ultrawide-angle lens, the processor 240 may output a preview based on image data acquired through a camera module including a wide-angle lens. This may be identically applied to a case in which the display 110 is expanded and then educed in the following embodiments.

In an embodiment, the processor 240 may maintain the camera module even if the expanded display 110 is reduced. The processor 240 may determine whether to maintain the camera module with no change by analyzing elements such as detected objects and photography environments. The processor 240 may maintain the camera module with no change upon confirming that elements such as photography objects and photography environments are unchanged, although the display 110 is reduced. This may be identically applied in FIG. 5B and following drawings.

Referring to FIG. 5B, when the display 110 is expanded, a third preview image 540 may be displayed on a second area of the display 110, based on a camera module including a macro lens. The third preview image 540 may include a third object 541 having a magnification corresponding to the macro lens.

In an embodiment, the processor 240 may acquire image data through a camera module including a macro lens. The angle of view regarding image data acquired through a camera module including a macro lens may be narrower than image data acquired through a camera module including a wide-angle lens. The processor 240 may output image data acquired based on the macro lens through the expanded display 110 as a preview image.

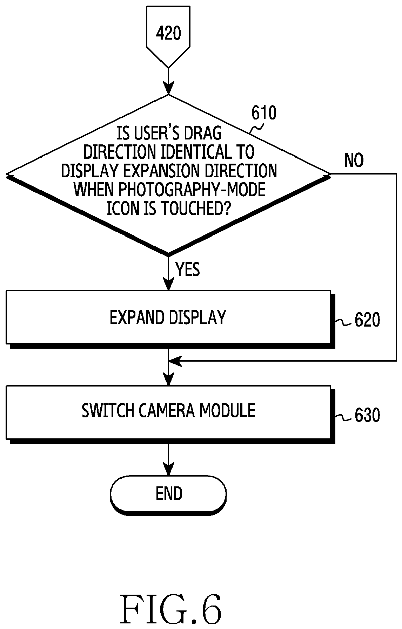

In an embodiment, when the expanded display 110 is reduced, the processor 240 may change the camera module. For example, when the display 110 is reduced while outputting a preview based on image data acquired through a camera module including a macro lens, the processor 240 may output a preview based on image data acquired through a camera module including a wide-angle lens. FIG. 6 is a flowchart illustrating a process of expanding a display in response to a user's drag input in an electronic device according to an embodiment. FIG. 6 may be understood as being performed after operation 420 in FIG. 4.

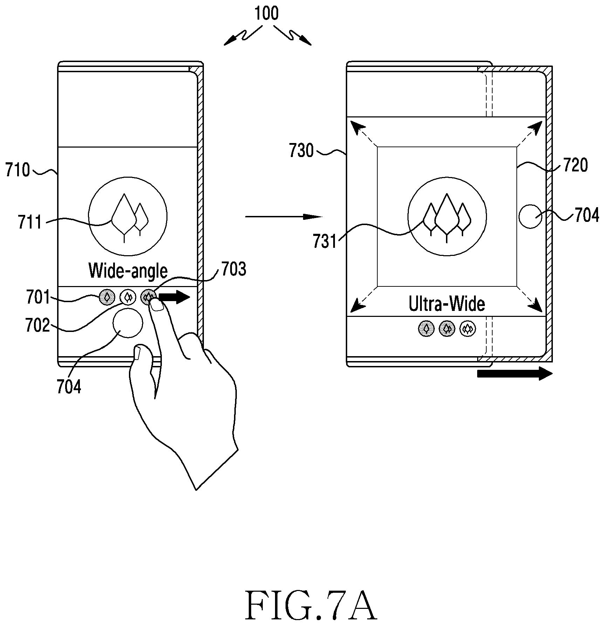

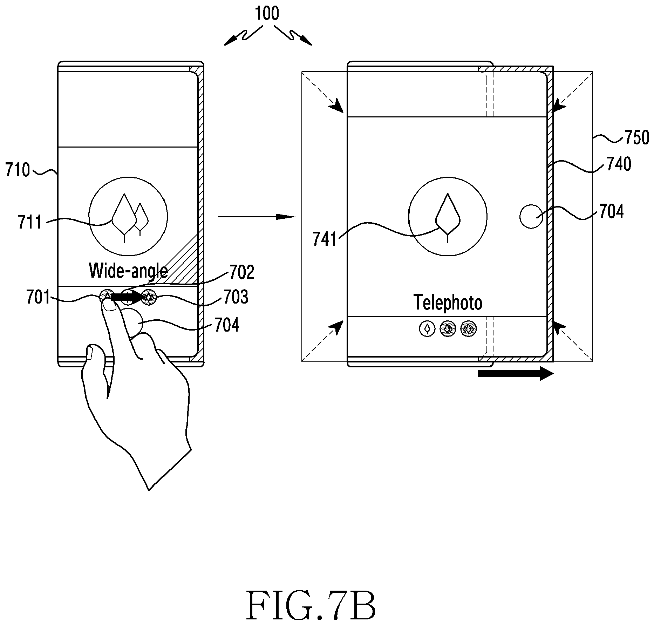

In operation 610 according to an embodiment, the processor 240 may determine whether the user's drag direction is a display expansion direction while a photography-mode icon is touched. The photography-mode icon may be understood as an icon associated with a photography mode. The icon associated with a photography mode will be described later in detail with reference to FIG. 7A and FIG. 7B.

In an embodiment, the processor 240 may determine whether to expand the display 110, based on the direction of the user's drag input. For example, when the direction of the user's drag input is identical to the direction of expansion of the display 110, the processor 240 may expand the display. When the direction of the user's drag input is opposite to the direction of expansion of the display 110, the processor 240 may not expand the display.

In operation 620 according to an embodiment, the processor 240 may expand the display. The processor 240 may expand the display 110 when the user's drag direction is identical to the display expansion direction while the photography-mode icon is touched.

In operation 630 according to an embodiment, the processor 240 may switch the camera module. The processor 240 may switch the currently operating camera module to a camera module corresponding to the drag input regardless of whether the display 110 is expanded.

In an embodiment, the processor 240 may switch the currently operating camera module to the second camera module 220 or the third camera module 230, based on the type of the drag input. The processor 240 may determine the type of the drag input, based on the starting point of the drag input. For example, when the position of the starting point of the drag input is included in an icon related to ultrawide-angle photography, may switch the currently operating camera module to the second camera module 220 including an ultrawide-angle lens. As another example, when the position of the starting point of the drag input is included in an icon related to telephotography and/or macro photography, the processor 240 may switch the currently operating camera module to the third camera module 230 including a telephoto lens and/or a macro lens.

In an embodiment, the processor 240 may acquire image data through the switched camera module. The processor 240 may output a preview image based on the acquired image data through an area of the display 110.

FIG. 7A is a flowchart illustrating a process of switching the currently operating camera module to the second camera module 220 in response to the user's drag input in an electronic device according to an embodiment. FIG. 7B is a flowchart illustrating a process of switching the currently operating camera module to the third camera module in response to the user's drag input in an electronic device according to an embodiment. FIG. 7A and FIG. 7B may illustrate an embodiment corresponding to FIG. 6.

Referring to FIG. 7A and FIG. 7B, the processor 240 may display a first icon 701, a second icon 702, a third icon 703, and a first button 704, which are related to a photography mode, in an area of the display 110. The first icon 701 may be a button for telephotography. The second icon 702 may be a button for normal photography. The third icon 703 may be a button for ultrawide-angle photography. The first button 704 may be a button for starting photography. The position of the first button 704 may be changed, based on whether the display is expanded. For example, when the display 110 is not expanded, the first button 704 may be positioned at the lower end of the display 110 when the display 110 is seen from the front. When the display 110 is expanded, the first button 704 may be positioned close to a side surface of the display 110 when the display 110 is seen from the front.

In an embodiment, the processor 240 may acquire the user's drag input. The processor 240 may determine whether to expand the display and whether to switch the camera module in response to the user's drag input. Upon acquiring the user's drag input, the processor 240 may detect the starting point of the drag input. The processor 240 may determine whether to switch the camera module, based on the starting point position of the drag point. For example, when the starting point of the drag input is included in the first icon 701, the processor 240 may switch the currently operating camera module to a camera module including a telephoto lens.

In an embodiment, the processor 240 may determine whether to expand the display 110, based on the direction of the user's drag input. For example, when the direction of the user's drag input is identical to the direction of expansion of the display 110, the processor 240 may expand the display. As another example, when the direction of the user's drag input is opposite to the direction of expansion of the display 110, the processor 240 may not expand the display 110.

In an embodiment, upon acquiring a drag input in the same direction as the direction of expansion of the display 110 or in a direction within 90° from the direction of expansion of the display 110, the processor 240 may expand the display 110. For example, when the direction of expansion of the display 110 is from left to right, the processor 240 may respond to the user's drag input being made from left to right and may expand the display 110 in response to the drag input.

In an embodiment, upon acquiring a drag input in a direction opposite to the direction of expansion of the display 110 or in a direction within 90° from the direction opposite to the direction of expansion of the display 110, the processor 240 may not expand the display 110. For example, when the direction of expansion of the display 110 is from left to right, the processor 240 may not expand the display 110 in response to the user's drag input being made from right to left.

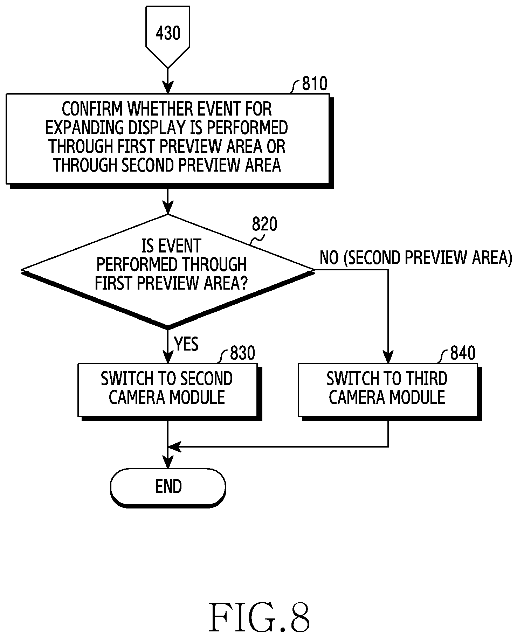

FIG. 8 is a flowchart illustrating a process of expanding a display and switching camera modules, based on a touched preview area in an electronic device according to an embodiment.

In operation 810 according to an embodiment, a processor 240 may determine whether an event for expanding a display 110 is performed through a first preview area 901 or through a second preview area 902.

In an embodiment, the processor 240 may divide an area of the display 110 in which a preview image is output into at least two areas. For example, the processor 240 may divide the same into a first preview area 901 and a second preview area 902. The processor 240 may configure a margin area between the first preview area 901 and the second preview area 902. The processor 240 may ignore a touch related to the margin area.

In an embodiment, when an event for expanding the display 110 is performed while the user holds a part of the first preview area 901, the processor 240 may switch the currently operating camera module to a camera module including a macro lens. When an event for expanding the display 110 is performed while the user holds a part of the second preview area 902, the processor 240 may switch the currently operating camera module to a camera module including an ultrawide-angle lens.

In an embodiment, the processor 240 may change configuration information regarding the camera module corresponding to the first preview area 901 and the camera module corresponding to the second preview area 902.

In operation 820 according to an embodiment, the processor 240 may determine whether an event for expanding the display is performed through the first preview area 901 of the display 110. The processor 240 may determine whether the user's touch occurs in the first preview area 901 or in the second preview area 902 through a touch panel included in the display 110.

In operation 830 according to an embodiment, the processor 240 may switch the operating camera module to a second camera module 220. The second camera module 220 mentioned in FIG. 8 may be understood as a camera module including a macro lens and/or a telephoto lens.

In operation 840 according to an embodiment, the processor 240 may switch the operating camera module to a third camera module 230. The third camera module 230 mentioned in FIG. 8 may be understood as a camera module including an ultrawide-angle lens.

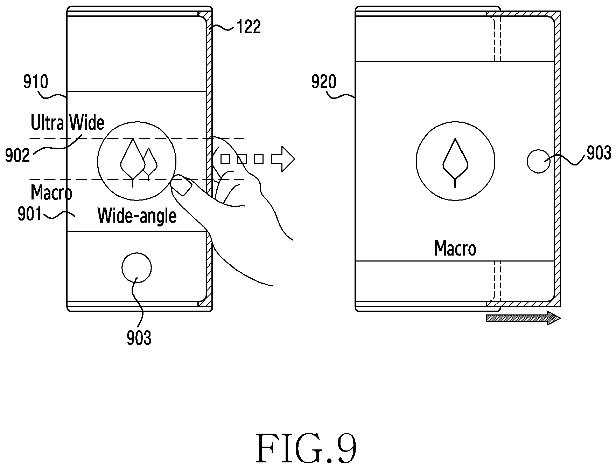

FIG. 9 illustrates a process of expanding a display and switching camera modules, based on a touched preview area in an electronic device according to an embodiment. FIG. 9 may illustrate an embodiment corresponding to FIG. 8.

In an embodiment, when the display 110 is expanded while the first preview area 901 is touched, the processor 240 may switch the operating camera module from the first camera module 210 to the second camera module 220. For example, when the user expands the display 110 by holding the first preview area 901 of the display 110, the processor 240 may switch the operating camera module from the first camera module 210 to the second camera module 220. The second camera module 220 may include a macro lens. The processor 240 may switch the operating camera module from the second camera module 220 to the first camera module 210 in response to reduction of the display 110.

In an embodiment, when the display 110 is expanded while the second preview area 902 is touched, the processor 240 may switch the operating camera module from the first camera module 210 to the third camera module 230. For example, when the user expands the display 110 by holding the second preview area 902 of the display 110, the processor 240 may switch the operating camera module from the first camera module 210 to the third camera module 230. The third camera module 230 may include an ultrawide-angle lens. The processor 240 may switch the operating camera module from the third camera module 230 to the first camera module 210 in response to reduction of the display 110.

In an embodiment, the processor 240 may output specific indications for identifying camera modules corresponding to the first preview area 901 and the second preview area 902 through the display 110. For example, the processor 240 may display the boundary between the first preview area 901 and the second preview area 902 which are divided from each other. The processor 240 may assign specific indications to the first preview area 901 and the second preview area 902 to secure visibility. For example, the processor 240 may display characters "tele" or "macro" in a partial area of the first preview area 901 or display related icons. The processor 240 may display characters "ultra-wide" in a partial area of the second preview area 902 or display related icons.

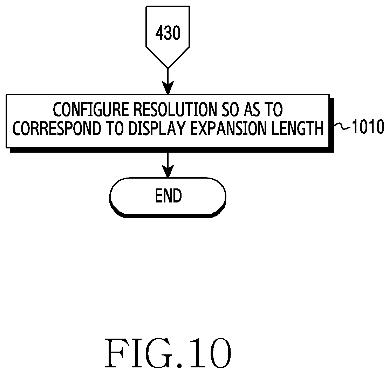

FIG. 10 is a flowchart illustrating a process of changing the resolution of a preview area according to the degree of expansion of a display in an electronic device according to an embodiment. FIG. 10 may be understood as being performed after operation 430 in FIG. 4.

In operation 1010 according to an embodiment, the processor 240 may configure the resolution and ratio of a preview image so as to correspond to the length of expansion of the display 110.

In an embodiment, the processor 240 may determine the ratio of a preview area in which a preview image is output so as to correspond to the configured resolution. For example, when the configured resolution is 1920 x 1080, the processor 240 may determine that the ratio of the preview area is 16:9. The processor 240 may output a preview image, based on the determined ratio of the preview area, through the display 110.

In an embodiment, the processor 240 may change the resolution according to the degree of expansion of the display 110. The processor 240 may determine the ratio of a preview area in which a preview image is output, based on the changed resolution. For example, when the resolution of the preview area is N x N as a result of full expansion of the display 110, the ratio of the preview area may be determined to be 1:1. The processor 240 may output a preview image, based on the determined ratio of the preview area, through the display 110.

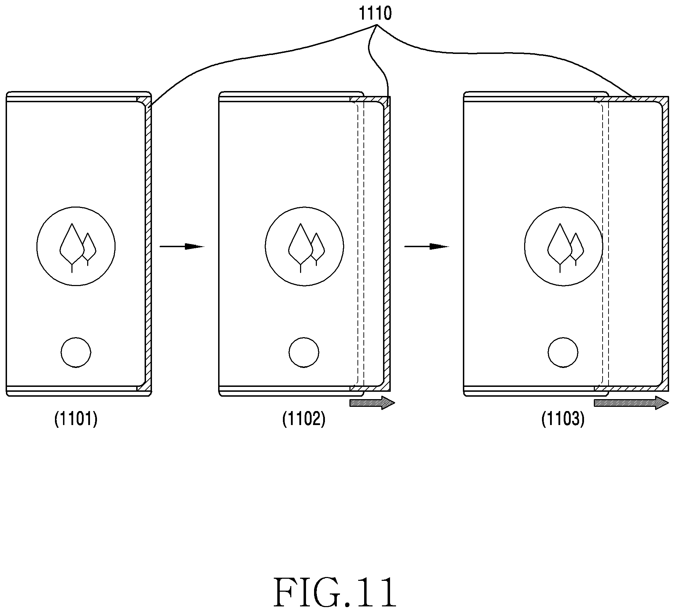

FIG. 11 illustrates a process of changing the resolution of a preview area according to the degree of expansion of a display in an electronic device according to an embodiment. FIG. 11 may illustrate an embodiment corresponding to FIG. 10.

FIG. 11 illustrates a state 1101 in which the display 110 is not expanded, a state 1102 in which the display 110 is expanded by a predetermined length, and a state 1103 in which the display 110 is fully expanded.

In an embodiment, the processor 240 may change the resolution of the preview area in response to a user input for expanding or reducing the display 110 by adjusting the sliding housing 1110.

In an embodiment, in the case of the state 1101 in which the display 110 is not expanded, the processor 240 may configure a resolution corresponding to the state in which the display 110 is not expanded. For example, when the horizontal/vertical ratio of the display 110 is 9:16 in the state in which the display 110 is not expanded, the processor 240 may control the ratio of the preview image to be 9:16 so as to correspond to the ratio of the display 110.

In an embodiment, in the case of the state 1102 in which the display 110 is expanded by a predetermined length, the processor 240 may configure a resolution corresponding to the state in which the display 110 is expanded by a predetermined length. For example, when the horizontal/vertical ratio of the display 110 is 3:4 in a state in which the display 110 is expanded by a first length, the processor 240 may control the ratio of the preview image to be 3:4 so as to correspond to the ratio of the display 110.

In an embodiment, in the case of the state 1103 in which the display 110 is fully expanded, the processor 240 may configure a resolution corresponding to the state in which the display 110 is fully expanded. For example, when the horizontal/vertical ratio of the display 110 is 1:1 in the state in which the display 110 is fully expanded, the processor 240 may control the ratio of the preview image to be 1:1 so as to correspond to the ratio of the display 110.

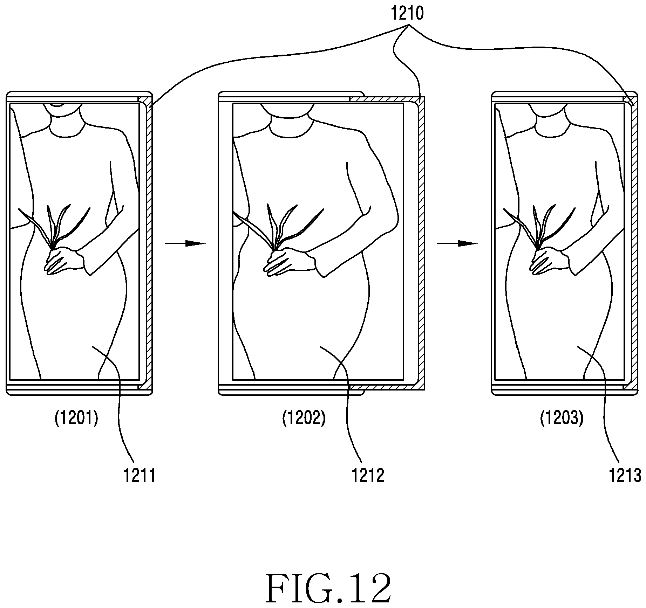

FIG. 12 illustrates a process of editing an image according to the degree of expansion of a display in an electronic device according to an embodiment.

In an embodiment, the processor 240 may edit the image in terms of the horizontal ratio in response to a user input for expanding or reducing the display 110 by adjusting the sliding housing 1210. For example, upon acquiring a user input for expanding the display 110, the processor 240 may increase the horizontal ratio of objects included in the preview image. As another example, upon acquiring a user input for reducing the display 110, the processor 240 may decrease the horizontal ratio of objects included in the preview image.

In an embodiment, when the user holds and expands a specific part of an object included in the preview image as an input for expanding the display 110, the horizontal ratio of the part may be decreased. For example, upon detecting the display 110 being expanded by holding an area of the display 110 in which shoulders of a person included in the preview image are positioned, the processor 240 may expand the person's shoulders in response to the expansion of the display 110. A process of reducing the display 110 may be identically applied.

In an embodiment, the processor 240 may apply a beauty effect to an image in response to a user input for expanding or reducing the display 110 by adjusting the sliding housing 1210. For example, upon detecting the display 110 being expanded by holding an area of the display 110 in which the waist of a person is positioned, the processor 240 may apply a beauty effect such that the waist area appears thin concurrently with expansion of the display 110. As another example, upon detecting the display 110 being expanded by holding an area of the display 110 in which the face of a person is positioned, the processor 240 may apply a beauty effect such that the face appears free of freckles concurrently with expansion of the display 110.

In an embodiment, the processor 240 may adjust a light source effect related to the image in response to the user input. For example, upon acquiring a user input for expanding the display 110, the processor 240 may recognize that the user intends to view the image in detail, thereby increasing the image brightness. As another example, upon acquiring a user input for reducing the display 110, the processor 240 may decrease the image brightness. Not only the above-describe light source effect, but various image effects may be applied or not applied according to whether the display 110 is expanded.

Fig. 13 is a block diagram illustrating an electronic device 1301 in a network environment 1300 according to various embodiments. Referring to Fig. 13, the electronic device 1301 in the network environment 1300 may communicate with an electronic device 1302 via a first network 1398 (e.g., a short-range wireless communication network), or at least one of an electronic device 1304 or a server 1308 via a second network 1399 (e.g., a long-range wireless communication network). According to an embodiment, the electronic device 1301 may communicate with the electronic device 1304 via the server 1308. According to an embodiment, the electronic device 1301 may include a processor 1320, memory 1330, an input module 1350, a sound output module 1355, a display module 1360, an audio module 1370, a sensor module 1376, an interface 1377, a connecting terminal 1378, a haptic module 1379, a camera module 1380, a power management module 1388, a battery 1389, a communication module 1390, a subscriber identification module(SIM) 1396, or an antenna module 1397. In some embodiments, at least one of the components (e.g., the connecting terminal 1378) may be omitted from the electronic device 1301, or one or more other components may be added in the electronic device 1301. In some embodiments, some of the components (e.g., the sensor module 1376, the camera module 1380, or the antenna module 1397) may be implemented as a single component (e.g., the display module 1360).

The processor 1320 may execute, for example, software (e.g., a program 1340) to control at least one other component (e.g., a hardware or software component) of the electronic device 1301 coupled with the processor 1320, and may perform various data processing or computation. According to one embodiment, as at least part of the data processing or computation, the processor 1320 may store a command or data received from another component (e.g., the sensor module 1376 or the communication module 1390) in volatile memory 1332, process the command or the data stored in the volatile memory 1332, and store resulting data in non-volatile memory 1334. According to an embodiment, the processor 1320 may include a main processor 1321 (e.g., a central processing unit (CPU) or an application processor (AP)), or an auxiliary processor 1323 (e.g., a graphics processing unit (GPU), a neural processing unit (NPU), an image signal processor (ISP), a sensor hub processor, or a communication processor (CP)) that is operable independently from, or in conjunction with, the main processor 1321. For example, when the electronic device 1301 includes the main processor 1321 and the auxiliary processor 1323, the auxiliary processor 1323 may be adapted to consume less power than the main processor 1321, or to be specific to a specified function. The auxiliary processor 1323 may be implemented as separate from, or as part of the main processor 1321.

The auxiliary processor 1323 may control at least some of functions or states related to at least one component (e.g., the display module 1360, the sensor module 1376, or the communication module 1390) among the components of the electronic device 1301, instead of the main processor 1321 while the main processor 1321 is in an inactive (e.g., sleep) state, or together with the main processor 1321 while the main processor 1321 is in an active state (e.g., executing an application). According to an embodiment, the auxiliary processor 1323 (e.g., an image signal processor or a communication processor) may be implemented as part of another component (e.g., the camera module 1380 or the communication module 1390) functionally related to the auxiliary processor 1323. According to an embodiment, the auxiliary processor 1323 (e.g., the neural processing unit) may include a hardware structure specified for artificial intelligence model processing. An artificial intelligence model may be generated by machine learning. Such learning may be performed, e.g., by the electronic device 1301 where the artificial intelligence is performed or via a separate server (e.g., the server 1308). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1330 may store various data used by at least one component (e.g., the processor 1320 or the sensor module 1376) of the electronic device 1301. The various data may include, for example, software (e.g., the program 1340) and input data or output data for a command related thererto. The memory 1330 may include the volatile memory 1332 or the non-volatile memory 1334.

The program 1340 may be stored in the memory 1330 as software, and may include, for example, an operating system (OS) 1342, middleware 1344, or an application 1346.

The input module 1350 may receive a command or data to be used by another component (e.g., the processor 1320) of the electronic device 1301, from the outside (e.g., a user) of the electronic device 1301. The input module 1350 may include, for example, a microphone, a mouse, a keyboard, a key (e.g., a button), or a digital pen (e.g., a stylus pen).

The sound output module 1355 may output sound signals to the outside of the electronic device 1301. The sound output module 1355 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1360 may visually provide information to the outside (e.g., a user) of the electronic device 1301. The display module 1360 may include, for example, a display, a hologram device, or a projector and control circuitry to control a corresponding one of the display, hologram device, and projector. According to an embodiment, the display module 1360 may include a touch sensor adapted to detect a touch, or a pressure sensor adapted to measure the intensity of force incurred by the touch.

The audio module 1370 may convert a sound into an electrical signal and vice versa. According to an embodiment, the audio module 1370 may obtain the sound via the input module 1350, or output the sound via the sound output module 1355 or a headphone of an external electronic device (e.g., an electronic device 1302) directly (e.g., wiredly) or wirelessly coupled with the electronic device 1301.

The sensor module 1376 may detect an operational state (e.g., power or temperature) of the electronic device 1301 or an environmental state (e.g., a state of a user) external to the electronic device 1301, and then generate an electrical signal or data value corresponding to the detected state. According to an embodiment, the sensor module 1376 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1377 may support one or more specified protocols to be used for the electronic device 1301 to be coupled with the external electronic device (e.g., the electronic device 1302) directly (e.g., wiredly) or wirelessly. According to an embodiment, the interface 1377 may include, for example, a high definition multimedia interface (HDMI), a universal serial bus (USB) interface, a secure digital (SD) card interface, or an audio interface.

A connecting terminal 1378 may include a connector via which the electronic device 1301 may be physically connected with the external electronic device (e.g., the electronic device 1302). According to an embodiment, the connecting terminal 1378 may include, for example, a HDMI connector, a USB connector, a SD card connector, or an audio connector (e.g., a headphone connector).

The haptic module 1379 may convert an electrical signal into a mechanical stimulus (e.g., a vibration or a movement) or electrical stimulus which may be recognized by a user via his tactile sensation or kinesthetic sensation. According to an embodiment, the haptic module 1379 may include, for example, a motor, a piezoelectric element, or an electric stimulator.

The camera module 1380 may capture a still image or moving images. According to an embodiment, the camera module 1380 may include one or more lenses, image sensors, image signal processors, or flashes.

The power management module 1388 may manage power supplied to the electronic device 1301. According to one embodiment, the power management module 1388 may be implemented as at least part of, for example, a power management integrated circuit (PMIC).

The battery 1389 may supply power to at least one component of the electronic device 1301. According to an embodiment, the battery 1389 may include, for example, a primary cell which is not rechargeable, a secondary cell which is rechargeable, or a fuel cell.

The communication module 1390 may support establishing a direct (e.g., wired) communication channel or a wireless communication channel between the electronic device 1301 and the external electronic device (e.g., the electronic device 1302, the electronic device 1304, or the server 1308) and performing communication via the established communication channel. The communication module 1390 may include one or more communication processors that are operable independently from the processor 1320 (e.g., the application processor (AP)) and supports a direct (e.g., wired) communication or a wireless communication. According to an embodiment, the communication module 1390 may include a wireless communication module 1392 (e.g., a cellular communication module, a short-range wireless communication module, or a global navigation satellite system (GNSS) communication module) or a wired communication module 1394 (e.g., a local area network (LAN) communication module or a power line communication (PLC) module). A corresponding one of these communication modules may communicate with the external electronic device via the first network 1398 (e.g., a short-range communication network, such as Bluetooth^{™}, wireless-fidelity (Wi-Fi) direct, or infrared data association (IrDA)) or the second network 1399 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1392 may identify and authenticate the electronic device 1301 in a communication network, such as the first network 1398 or the second network 1399, using subscriber information (e.g., international mobile subscriber identity (IMSI)) stored in the subscriber identification module 1396.

The wireless communication module 1392 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1392 may support a high-frequency band (e.g., the mmWave band) to achieve, e.g., a high data transmission rate. The wireless communication module 1392 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1392 may support various requirements specified in the electronic device 1301, an external electronic device (e.g., the electronic device 1304), or a network system (e.g., the second network 1399). According to an embodiment, the wireless communication module 1392 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1397 may transmit or receive a signal or power to or from the outside (e.g., the external electronic device) of the electronic device 1301. According to an embodiment, the antenna module 1397 may include an antenna including a radiating element composed of a conductive material or a conductive pattern formed in or on a substrate (e.g., a printed circuit board (PCB)). According to an embodiment, the antenna module 1397 may include a plurality of antennas (e.g., array antennas). In such a case, at least one antenna appropriate for a communication scheme used in the communication network, such as the first network 1398 or the second network 1399, may be selected, for example, by the communication module 1390 (e.g., the wireless communication module 1392) from the plurality of antennas. The signal or the power may then be transmitted or received between the communication module 1390 and the external electronic device via the selected at least one antenna. According to an embodiment, another component (e.g., a radio frequency integrated circuit (RFIC)) other than the radiating element may be additionally formed as part of the antenna module 1397.

According to various embodiments, the antenna module 1397 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1301 and the external electronic device 1304 via the server 1308 coupled with the second network 1399. Each of the electronic devices 1302 or 1304 may be a device of a same type as, or a different type, from the electronic device 1301. According to an embodiment, all or some of operations to be executed at the electronic device 1301 may be executed at one or more of the external electronic devices 1302, 1304, or 1308. For example, if the electronic device 1301 should perform a function or a service automatically, or in response to a request from a user or another device, the electronic device 1301, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1301. The electronic device 1301 may provide the outcome, with or without further processing of the outcome, as at least part of a reply to the request. To that end, a cloud computing, distributed computing, mobile edge computing (MEC), or client-server computing technology may be used, for example. The electronic device 1301 may provide ultra low-latency services using, e.g., distributed computing or mobile edge computing. In another embodiment, the external electronic device 1304 may include an internet-of-things (IoT) device. The server 1308 may be an intelligent server using machine learning and/or a neural network. According to an embodiment, the external electronic device 1304 or the server 1308 may be included in the second network 1399. The electronic device 1301 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1340) including one or more instructions that are stored in a storage medium (e.g., internal memory 1336 or external memory 1338) that is readable by a machine (e.g., the electronic device 1301). For example, a processor (e.g., the processor 1320) of the machine (e.g., the electronic device 1301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Fig. 14 is a block diagram 1400 illustrating the camera module 1380 according to various embodiments. Referring to Fig. 14, the camera module 1380 may include a lens assembly 1410, a flash 1420, an image sensor 1430, an image stabilizer 1440, memory 1450 (e.g., buffer memory), or an image signal processor 1460. The lens assembly 1410 may collect light emitted or reflected from an object whose image is to be taken. The lens assembly 1410 may include one or more lenses. According to an embodiment, the camera module 1380 may include a plurality of lens assemblies 1410. In such a case, the camera module 1380 may form, for example, a dual camera, a 360-degree camera, or a spherical camera. Some of the plurality of lens assemblies 1410 may have the same lens attribute (e.g., view angle, focal length, auto-focusing, f number, or optical zoom), or at least one lens assembly may have one or more lens attributes different from those of another lens assembly. The lens assembly 1410 may include, for example, a wide-angle lens or a telephoto lens.

The flash 1420 may emit light that is used to reinforce light reflected from an object. According to an embodiment, the flash 1420 may include one or more light emitting diodes (LEDs) (e.g., a red-green-blue (RGB) LED, a white LED, an infrared (IR) LED, or an ultraviolet (UV) LED) or a xenon lamp. The image sensor 1430 may obtain an image corresponding to an object by converting light emitted or reflected from the object and transmitted via the lens assembly 1410 into an electrical signal. According to an embodiment, the image sensor 1430 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 1430 may be implemented using, for example, a charged coupled device (CCD) sensor or a complementary metal oxide semiconductor (CMOS) sensor.

The image stabilizer 1440 may move the image sensor 1430 or at least one lens included in the lens assembly 1410 in a particular direction, or control an operational attribute (e.g., adjust the read-out timing) of the image sensor 1430 in response to the movement of the camera module 1380 or the electronic device 1301 including the camera module 1380. This allows compensating for at least part of a negative effect (e.g., image blurring) by the movement on an image being captured. According to an embodiment, the image stabilizer 1440 may sense such a movement by the camera module 1380 or the electronic device 1301 using a gyro sensor (not shown) or an acceleration sensor (not shown) disposed inside or outside the camera module 1380. According to an embodiment, the image stabilizer 1440 may be implemented, for example, as an optical image stabilizer.

The memory 1450 may store, at least temporarily, at least part of an image obtained via the image sensor 1430 for a subsequent image processing task. For example, if image capturing is delayed due to shutter lag or multiple images are quickly captured, a raw image obtained (e.g., a Bayer-patterned image, a high-resolution image) may be stored in the memory 1450, and its corresponding copy image (e.g., a low-resolution image) may be previewed via the display device 1360. Thereafter, if a specified condition is met (e.g., by a user's input or system command), at least part of the raw image stored in the memory 1450 may be obtained and processed, for example, by the image signal processor 1460. According to an embodiment, the memory 1450 may be configured as at least part of the memory 1330 or as a separate memory that is operated independently from the memory 1330.

The image signal processor 1460 may perform one or more image processing with respect to an image obtained via the image sensor 1430 or an image stored in the memory 1450. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 1460 may perform control (e.g., exposure time control or read-out timing control) with respect to at least one (e.g., the image sensor 1430) of the components included in the camera module 1380. An image processed by the image signal processor 1460 may be stored back in the memory 1450 for further processing, or may be provided to an external component (e.g., the memory 1330, the display device 1360, the electronic device 1302, the electronic device 1304, or the server 1308) outside the camera module 1380. According to an embodiment, the image signal processor 1460 may be configured as at least part of the processor 1320, or as a separate processor that is operated independently from the processor 1320. If the image signal processor 1460 is configured as a separate processor from the processor 1320, at least one image processed by the image signal processor 1460 may be displayed, by the processor 1320, via the display device 1360 as it is or after being further processed.

According to an embodiment, the electronic device 1301 may include a plurality of camera modules 1380 having different attributes or functions. In such a case, at least one of the plurality of camera modules 1380 may form, for example, a wide-angle camera and at least another of the plurality of camera modules 1380 may form a telephoto camera. Similarly, at least one of the plurality of camera modules 1380 may form, for example, a front camera and at least another of the plurality of camera modules 1380 may form a rear camera.

In various embodiments, an electronic device 100 may include a flexible display 110, a first camera module 210, a second camera module 220, and at least one processor. The at least one processor (for example, the processor 240 in FIG. 2) may execute a first application associated with the first camera module 210 and the second camera module 220. The at least one processor (for example, the processor 240 in FIG. 2) may output, in response to execution of the first application, a first preview image based on first image data acquired through the first camera module 210 in a first area of the flexible display 110. The at least one processor (for example, the processor 240 in FIG. 2) may detect an event for expanding the flexible display 110 while the first preview image is output on the flexible display 110. The at least one processor (for example, the processor 240 in FIG. 2) may output, in response to detecting of the event, a second preview image based on second image data acquired through the second camera module 220 in a second area expanded compared with the first area of the flexible display 110.

In an embodiment, the electronic device 100 may further include a third camera module 230 in addition to the first camera module 210 and the second camera module 220. The at least one processor (for example, the processor 240 in FIG. 2) may detect at least one of an object or a background through the first image data. The at least one processor (for example, the processor 240 in FIG. 2) may analyze at least one of the detected object or background. The at least one processor (for example, the processor 240 in FIG. 2) may output a second preview image based on the second image data acquired through the second camera module 220, based on the analysis, or output a third preview image based on third image data acquired through the third camera module 230.

In an embodiment, in connection with the at least one processor (for example, the processor 240 in FIG. 2), the first camera module 210 may include a wide-angle lens, the second camera module 220 may include at least one of a macro lens or a telephoto lens, and the third camera module 230 may include an ultrawide-angle lens.

In an embodiment, the event may be generated by at least one of an external force by which at least one housing of the electronic device is pulled, a user's drag input, or a user's touch input.

In an embodiment, the at least one processor (for example, the processor 240 in FIG. 2) may acquire a user's drag input and determine a starting point of the drag input. The at least one processor (for example, the processor 240 in FIG. 2) may output a preview image based on image data acquired through an ultrawide-angle camera module on the flexible display when the starting point of the drag input is included in an icon related to the ultrawide-angle camera module. The at least one processor (for example, the processor 240 in FIG. 2) may output a preview image based on image data acquired through a macro or telephoto camera module on the flexible display when the starting point of the drag input is included in an icon related to the macro or telephoto camera module.

In an embodiment, the at least one processor (for example, the processor 240 in FIG. 2) may acquire a user's drag input, and may expand the flexible display 110 when a direction of the drag input is identical to a direction of expansion of the flexible display 110.

In an embodiment, the at least one processor (for example, the processor 240 in FIG. 2) may output an intermediate image of the first preview image and the second preview image over N frames when switching an operating camera module from the first camera module 210 to the second camera module 220.

In an embodiment, the at least one processor (for example, the processor 240 in FIG. 2) may outputs a preview image based on image data acquired through the second camera module 220 on the flexible display when the flexible display 110 is expanded in a state in which a user's touch is detected in a first preview area among preview areas in which preview images are output. The at least one processor (for example, the processor 240 in FIG. 2) may output a preview image based on image data acquired through a third camera module 230 on the flexible display when the flexible display 110 is expanded in a state in which a user's touch is detected in a second preview area other than the first preview area among the preview areas.

In an embodiment, the at least one processor (for example, the processor 240 in FIG. 2) may adjust a ratio of a preview area in which a preview image is output, based on a degree of expansion of the flexible display 110.

In an embodiment, the at least one processor (for example, the processor 240 in FIG. 2) may perform image editing regarding an object included in a preview image, based on a degree of expansion of the flexible display 110.

In various embodiments, a method for operating an electronic device 100 may include the operations of executing a first application associated with a first camera module 210 and a second camera module 220, outputting, in response to execution of the first application, a first preview image based on first image data acquired through the first camera module 210 in a first area of a flexible display 110, detecting an event for expanding the flexible display 110 while the first preview image is output on the flexible display 110, and outputting, in response to detecting of the event, a second preview image based on second image data acquired through the second camera module 220 in a second area expanded compared with the first area of the flexible display 110.

In an embodiment, the method for operating an electronic device 100 may include the operations of detecting at least one of an object or a background through the first image data, analyzing at least one of the detected object or background, and outputting a second preview image based on the second image data acquired through the second camera module 220, based on the analysis, or outputting a third preview image based on third image data acquired through the third camera module 230.

In an embodiment, the method for operating an electronic device 100 may include the operations of acquiring a user's drag input, determining a starting point of the drag input, outputting a preview image based on image data acquired through an ultrawide-angle camera module on the flexible display 110 when the starting point of the drag input is included in an icon related to the ultrawide-angle camera module, and outputting a preview image based on image data acquired through a macro or telephoto camera module on the flexible display 110 when the starting point of the drag input is included in an icon related to the macro or telephoto camera module.

In an embodiment, the method for operating an electronic device 100 may include the operations of acquiring a user's drag input, and expanding the flexible display 110 when a direction of the drag input is identical to a direction of expansion of the flexible display 110.

In an embodiment, the method for operating an electronic device 100 may include the operations of outputting a preview image based on image data acquired through the second camera module 220 on the flexible display when the flexible display 110 is expanded in a state in which a user's touch is detected in a first preview area among preview areas in which preview images are output, and outputting a preview image based on image data acquired through a third camera module 230 on the flexible display 110 when the flexible display 110 is expanded in a state in which a user's touch is detected in a second preview area other than the first preview area among the preview areas.

In various embodiments, an electronic device100 may include a display 110, multiple camera modules including a first camera module 210, a second camera module 220, and a third camera module 230, and at least one processor electrically connected to the display 110 and the multiple camera modules. The at least one processor (for example, the processor 240 in FIG. 2) may execute a first application associated with the multiple camera modules. The at least one processor (for example, the processor 240 in FIG. 2) may output, in response to execution of the first application, a first preview image based on first image data acquired through the first camera module 210 in a first area of the flexible display. The at least one processor (for example, the processor 240 in FIG. 2) may detect an event for expanding the display 110 while the first preview image is output on the flexible display 110. The at least one processor (for example, the processor 240 in FIG. 2) may activate the second camera module 220 or the third camera module 230 in response to detecting of the event. The at least one processor (for example, the processor 240 in FIG. 2) may output a second preview image based on second image data acquired through the second camera module 220 or a third preview image based on third image data acquired through the third camera module 230 in a second area expanded compared with the first area of the display 110.

In an embodiment, the at least one processor (for example, the processor 240 in FIG. 2) may analyze the distance between the electronic device 100 and an object, a focal state, and the first image data and may determine, based on the analysis, whether to output the second preview image in the second area or to output the third preview image in the second area.

In an embodiment, the at least one processor (for example, the processor 240 in FIG. 2) may acquire a user's drag input and determine a starting point of the drag input. The at least one processor (for example, the processor 240 in FIG. 2) may output a preview image based on image data acquired through an ultrawide-angle camera module on the flexible display when the starting point of the drag input is included in an icon related to the ultrawide-angle camera module, and may output a preview image based on image data acquired through a macro or telephoto camera module on the flexible display when the starting point of the drag input is included in an icon related to the macro or telephoto camera module.

In an embodiment, the at least one processor (for example, the processor 240 in FIG. 2) may acquire a user's drag input and expand the display 110 when a direction of the drag input is identical to a direction of expansion of the display 110.

In an embodiment, the at least one processor (for example, the processor 240 in FIG. 2) may output a preview image based on image data acquired through the second camera module 220 on the flexible display 110 when the display 110 is expanded in a state in which a user's touch is detected in a first preview area among preview areas in which preview images are output. The at least one processor (for example, the processor 240 in FIG. 2) may output a preview image based on image data acquired through a third camera module 230 on the display when the display 110 is expanded in a state in which a user's touch is detected in a second preview area other than the first preview area among the preview areas.

## Claims

1. An electronic device comprising:
a flexible display;
a first camera module;
a second camera module; and
at least one processor electrically connected to the flexible display, the first camera module, and the second camera module,
wherein the at least one processor is configured to:
execute a first application associated with the first camera module and the second camera module;
output, in response to execution of the first application, a first preview image based on first image data acquired through the first camera module in a first area of the flexible display;
detect an event for expanding the flexible display while the first preview image is output on the flexible display; and
output, in response to detecting of the event, a second preview image based on second image data acquired through the second camera module in a second area expanded compared with the first area of the flexible display.

2. The electronic device of claim 1, further comprising a third camera module,
wherein the at least one processor is configured to:
detect at least one of an object or a background through the first image data;
analyze at least one of the detected object or background; and
output a second preview image based on the second image data acquired through the second camera module, based on the analysis, or outputs a third preview image based on third image data acquired through the third camera module.

3. The electronic device of claim 2, wherein the first camera module comprises a wide-angle lens, the second camera module comprises at least one of a macro lens or a telephoto lens, and the third camera module comprises an ultrawide-angle lens.

4. The electronic device of claim 1, wherein the event is generated by at least one of an external force by which at least one housing of the electronic device is pulled, a user's drag input, or a user's touch input.

5. The electronic device of claim 1, wherein the at least one processor is configured to:
acquire a user's drag input;
determine a starting point of the drag input;
output a preview image based on image data acquired through an ultrawide-angle camera module on the flexible display in case that the starting point of the drag input is included in an icon related to the ultrawide-angle camera module; and
output a preview image based on image data acquired through a macro or telephoto camera module on the flexible display in case that the starting point of the drag input is included in an icon related to the macro or telephoto camera module.

6. The electronic device of claim 1, wherein the at least one processor is configured to:
acquire a user's drag input; and
expand the display in case that a direction of the drag input is identical to a direction of expansion of the flexible display.

7. The electronic device of claim 1, wherein the at least one processor is configured to output an intermediate image of the first preview image and the second preview image over N frames in case of switching an operating camera module from the first camera module to the second camera module.

8. The electronic device of claim 1, wherein the at least one processor is configured to:
output a preview image based on image data acquired through the second camera module on the flexible display in case that the flexible display is expanded in a state in which a user's touch is detected in a first preview area among preview areas in which preview images are output; and
output a preview image based on image data acquired through a third camera module on the flexible display in case that the flexible display is expanded in a state in which a user's touch is detected in a second preview area other than the first preview area among the preview areas.

9. The electronic device of claim 1, wherein the at least one processor is configured to adjust a ratio of a preview area in which a preview image is output, based on a degree of expansion of the flexible display.

10. The electronic device of claim 1, wherein the at least one processor is configured to perform image editing regarding an object included in a preview image, based on a degree of expansion of the flexible display.

11. A method for operating an electronic device, the method comprising:
executing a first application associated with a first camera module and a second camera module;
outputting, in response to execution of the first application, a first preview image based on first image data acquired through the first camera module in a first area of a flexible display;
detecting an event for expanding the flexible display while the first preview image is output on the flexible display; and
outputting, in response to detecting of the event, a second preview image based on second image data acquired through the second camera module in a second area expanded compared with the first area of the flexible display.

12. The method of claim 11, comprising:
detecting at least one of an object or a background through the first image data;
analyzing at least one of the detected object or background; and
outputting a second preview image based on the second image data acquired through the second camera module, based on the analysis, or outputting a third preview image based on third image data acquired through the third camera module,
wherein the first camera module comprises a wide-angle lens, the second camera module comprises at least one of a macro lens or a telephoto lens, and the third camera module comprises an ultrawide-angle lens.

13. The method of claim 11, comprising:
acquiring a user's drag input;
determining a starting point of the drag input;
outputting a preview image based on image data acquired through an ultrawide-angle camera module on the flexible display in case that the starting point of the drag input is included in an icon related to the ultrawide-angle camera module; and
outputting a preview image based on image data acquired through a macro or telephoto camera module on the flexible display in case that the starting point of the drag input is included in an icon related to the macro or telephoto camera module.

14. The method of claim 11, comprising:
acquiring a user's drag input; and
expanding the display in case that a direction of the drag input is identical to a direction of expansion of the flexible display.

15. The method of claim 11, comprising:
outputting a preview image based on image data acquired through the second camera module on the flexible display in case that the flexible display is expanded in a state in which a user's touch is detected in a first preview area among preview areas in which preview images are output; and
outputting a preview image based on image data acquired through a third camera module on the flexible display in case that the flexible display is expanded in a state in which a user's touch is detected in a second preview area other than the first preview area among the preview areas.
